# EUROPEAN PATENT SPECIFICATION

(11) **EP 3 508 351 B1**
(45) Date of publication and mention of the grant of the patent: **15.03.2023**
(21) Application number: 17845286.8
(22) Date of filing: 22.08.2017
(51) Int. Cl.: B44B 5/00, B44B 5/02, B31F 1/07, B26D 7/26, B26F 1/44

(54) **MANUALLY-OPERATED PATTERN CUTTER**
HANDBEDIENTE MUSTERSCHNEIDER
DISPOSITIF DE COUPE DE MOTIFS À COMMANDE MANUELLE

(30) Priority: 31.08.2016 CN 201610795979
(43) Date of publication of application: 10.07.2019
(73) Proprietor: Parric Ningbo Stationery And Gifts MFG. Co., Ltd., Ningbo, Zhejiang 315200 (CN)
(72) Inventor: LI, Fuping, Ningbo Zhejiang 315200 (CN)
(74) Representative: RGTH
(86) International application number: PCT/CN2017/098486
(87) International publication number: WO 2018/040984

(56) References cited:
- CN-A- 105 015 241
- CN-A- 105 015 241
- CN-A- 106 183 583
- CN-U- 205 989 604
- CN-Y- 2 770 998
- CN-Y- 2 770 998
- CN-Y- 201 172 352
- CN-Y- 201 172 352
- US-A- 3 264 978
- US-A1- 2006 272 520
- US-A1- 2006 272 520

## Description

### FIELD OF THE INVENTION

The present invention relates to a pattern embossing or cutting tool, and more particularly to a manual craft cutting machine for pattern making on a pattern medium, such as paper, non-woven fabric, plastic sheet, cork, foil, leather, EVA, and the like.

### BACKGROUND OF THE INVENTION

A conventional manual embossing or cutting tool for pattern making on the surface of a pattern medium such as paper generally includes a housing, a template, a press roller, a backing plate, and a drive mechanism. The template includes a pair of upper and lower templates. The pattern medium is sandwiched between the two templates. The upper template and the lower template are provided with concave and convex patterns which match with each other. The concave and convex patterns may be through cutting structures, or may be non-through embossing structures to abut against each other. The press roller is usually composed of a pair of press rollers. In complex cases can use more than one pair of press rollers. A retainer is provided at both ends of the press roller. The press roller is rotated under restriction of the retainer. The press roller is driven by the drive mechanism to rotate. The backing plate is composed of a pair of backing plates attached to each other and sandwiched between the press rollers. The template and the pattern medium are sandwiched between the backing plates. When the press rollers are rotated, the press rollers drive the backing plates to pass through the rolling surfaces of the press rollers. After the template is pressed by the press rollers, the pattern medium between the templates is pressed to generate a template pattern. The drive mechanism comprises a handle, a gear set, and a transmission shaft. When the handle is rotated, the gear set is driven to rotate with the preset gear ratio, and the gear set drives the press rollers to rotate.

The disadvantages of the prior art are as follows: the stress between the press rollers usually reaches 600kg, and the retainer is under great stress. Therefore, the retainer is fastened in the housing by using a fixed structure. When different patterns are made and different pattern mediums are used, it is required to use various backing plates in different thicknesses. This needs to store a large number of backing plates in different thicknesses. The cost is high, and it is inconvenient for operation, and the working efficiency is low. Moreover, in many cases, the thickness of the template and the pattern medium is very thin. The thickness of a different backing plate cannot meet the requirement. It is necessary to use a pluggable backing plate. The pluggable backing plate is also very thin. In actual use, it is necessary to test repeatedly to decide the number of layers, so the working efficiency is very low.

The information disclosed in this background is only for understanding of the general background of the invention and should not be taken as an acknowledgment or any form of suggestion that this information constitutes the prior art that is already known in this field to a person skilled in the art.
CN2770998 Y discloses a combined roller die press, which comprises two rollers which rotates relatively, are fixed and can rotate to drive a cutting die or a convex die plate. Besides, the roller die press can be assembled and disassembled and has the effect of space saving. The roller die press is composed of a rolling mechanism, an outer shell, a bottom cover and two bridges, wherein the rolling mechanism comprises two rollers which can rotate relatively, the front and the back sides of the outer shell are respectively provided with an opening and the two openings and the two rollers form a space for a cutting die or a convex die plate to move in.

### SUMMARY OF THE INVENTION

The primary object of the present invention is to provide a manual craft cutting machine capable of adjusting the spacing between press rolls according to the specific needs of a pattern medium and pattern making to improve the efficiency of the pattern making and to reduce the cost of the production tool and to improve the cleanness of the production environment.

In order to achieve the aforesaid object, the manual craft cutting machine of the present invention comprises a housing, , a press roller, a retainer, a backing plate, and a drive mechanism. A pattern medium is sandwiched between the upper and lower templates. The upper template and the lower template are provided with concave and convex patterns which match with each other. The concave and convex patterns may be through cutting structures, or may be non-through embossing structures to abut against each other. One of the upper and lower templates may be a smooth plate not having a pattern. The press roller is composed of a pair of a first press roller and a second press roller. More than one pair of press rollers may be used in special situations. The press rollers are disposed axially parallel to each other. Two ends of the press roller form a roller axle or extend in an axial direction of the press roller to form the roller axle. The roller axle is confined by the retainer. The press roller is rotated under restriction of the retainer. When the press rollers are rotated, the press rollers drive the backing plates to pass through the rolling surfaces of the press rollers. After the template is pressed by the press rollers, the pattern medium between the templates is pressed to generate a template pattern. Wherein, the retainer comprises a positioning retainer and a sliding retainer. The positioning retainer is tightly connected with the housing. The positioning retainer is provided with a slide groove. The sliding retainer is inserted in the slide groove and movable along the slide groove. The sliding retainer comprises a first sliding retainer rotatably connected with the first press roller and a second sliding retainer rotatably connected with the second press roller. The drive mechanism includes a handle and a gear set. The gear set includes a speed reduction gear set and a constant speed gear set. The speed reduction gear set includes a handle gear, a speed reduction gear or the speed reduction gear set to mesh with each other. The handle gear is rotated along with the handle. The speed reduction gear is connected with the first press roller or the second press roller to drive one of the two press rollers to rotate. The constant speed gear set includes a pair of a first constant speed gear and a second constant speed gear to mesh with each other. The constant speed gears are fixed on the roller axles of the first press roller and the second press roller, respectively. When one of the press rollers is driven by the speed reduction gear to rotate, the other press roller is driven by the constant speed gear to rotate at a constant speed. The manual craft cutting machine further comprises a press roller spacing adjustment mechanism. The press roller spacing adjustment mechanism comprises a shift adjusting mechanism for adjusting a large spacing between the press rollers and a fine adjustment mechanism for adjusting a fine spacing between the press rollers. The shift adjustment mechanism drives the first sliding retainer to move along the slide groove, and the fine adjustment mechanism drives the second sliding retainer to move along the slide groove, so that the spacing between the press rollers can be quickly and largely adjusted according to the needs, and a fine spacing adjustment can be achieved depending on the spacing between the temples and the stress requirement.
In the aforesaid technical solution, preferably, the manual craft cutting machine comprises a template and a backing plate, wherein the template includes a pair of upper and lower templates, a pattern medium being sandwiched between the upper and lower templates, and wherein the backing plate is composed of a pair of backing plates attached to each other and sandwiched between the press rollers, the template being sandwiched between the backing plates, and wherein the positioning retainer is disposed at the two ends of the press roller.

In the aforesaid technical solution, preferably, the shift adjustment mechanism includes a shift adjustment knob, a shift adjustment shaft, and a shift driving key. The shift adjustment shaft is parallel to the first press roller. The shift driving key is fitted and fixed on two ends of the shift adjustment shaft and rotated along with the shift adjustment shaft. The shift driving key has shift key surfaces. The number of the shift key surfaces is two or more than two. Axial distances between the different shift key surfaces and the shift adjustment shaft are different, corresponding to the change of the distance between the press rollers. The first sliding retainer at two ends of the first press roller is provided with a corresponding shift driven key. The shift driven key has a corresponding shift driven key surface. When the shift adjustment knob is rotated, the shift adjustment shaft is driven to rotate. Abutting surfaces of the shift key surface and the shift driven key surface generate a change to adjust the spacing between the press rollers.

In the aforesaid technical solution, preferably, a shift adjustment shaft support seat is provided between the two ends of the shift adjustment shaft, so that the shift adjustment shaft does not bend due to excessive stress when the press rollers are working.

In the aforesaid technical solution, preferably, the shift driven key is separately provided and embedded in a surface of the first sliding retainer, which may be made of a hard wear-resistant material independently so as to ensure the rigidity and wear resistance of the shift driven key surface and reduce the material requirements of the entire first sliding retainer to reduce the cost.

In the aforesaid technical solution, preferably, the positioning retainer is a paired housing structure, side walls at both sides of the housing structure are vertical structures. The side walls form the slide groove, which can reduce the complexity of the structure of the retainer.

In the aforesaid technical solution, preferably, a return spring is provided between the positioning retainer and the first sliding retainer, so that the shift key surface and the shift driven key surface are always in stable contact with each other.

In the aforesaid technical solution, preferably, the fine adjustment mechanism includes a fine adjustment knob, a fine adjustment shaft, and a fine adjustment turning wheel. The fine adjustment shaft is parallel to the second press roller. The fine adjustment turning wheel is sleeved and fixed on two ends of the fine adjustment shaft and rotated along with the fine adjustment shaft. A center axis of the fine adjustment turning wheel is deviated from an axis of the fine adjustment shaft. The deviated distance corresponds to the fine adjustment distance of the press rollers. The second sliding retainer is provided with a fine adjustment tuning wheel hole for mounting the fine adjustment tuning wheel. The fine adjustment shaft is driven by the fine adjustment knob to rotate. The fine adjustment tuning wheel drives the second sliding retainer to move, corresponding to the slight distance change between the press rollers.

In the aforesaid technical solution, preferably, the fine adjustment mechanism further includes a fine adjustment gear set. The fine adjustment gear set includes a pair of a fine adjustment gear and a fine adjustment pinion to mesh with each other. The fine adjustment gear is fixedly connected with the fine adjustment shaft. The fine adjustment pinion is connected with the housing or the positioning retainer, so that the fine adjustment knob reduces the force when the fine adjustment shaft is driven, thereby improving the feeling of fine adjustment.

In the aforesaid technical solution, preferably, a fine adjustment shaft support seat is provided between the two ends of the fine adjustment shaft, so that the fine adjustment shaft does not bend due to excessive stress when the press rollers are working.

In the aforesaid technical solution, preferably, the fine adjustment knob is provided with a locking gear. A sleeve is axially disposed on the locking gear. One end of the sleeve is axially connected to the fine adjustment knob. An axle of the fine adjustment pinion is fitted in the sleeve. The fine adjustment pinion and the locking gear are coaxially connected. The housing or the positioning retainer is provided with a fine adjustment locking groove. The fine adjustment locking groove has a shape matched with the locking gear. A push spring is provided in the sleeve. When the fine adjustment knob is adjusted, the fine adjustment knob compresses the push spring and the fine adjustment knob pushes the locking gear to move axially, so that the locking gear is detached from the fine adjustment locking groove to be unlocked. At this time, the fine adjustment shaft can be rotated to adjust the second press roller. When the adjustment is completed, the fine adjustment knob is released. Under the driving force of the push spring, the locking gear slides axially along with the fine adjustment knob and is inserted in the fine adjustment locking groove again so that the second press roller is kept in a locked state.

In the aforesaid technical solution, preferably, the gears of the speed reduction gear set and the constant speed gear set are formed by stamping a thin metal plate. The thickness of the gear can be achieved by means of superimposing and connecting as needed so that the cost of the gear can be lowered while meeting performance requirements.

In the aforesaid technical solution, preferably, two sides of the housing are provided with conveying plates. The conveying plates are rotatably connected with the housing. In a working state, the conveying plates are unfolded to hold the backing plates. In a non-working state, the conveying plates are folded to abut against the housing.

In the aforesaid technical solution, preferably, a bottom of the housing is provided with support legs. The support legs each include a suction cup that can be moved up and down. An upper portion of the suction cup is fixedly connected with a connecting seat. The connecting seat is disposed inside the housing. One end of the connecting seat is provided with a shaft hole. The shaft hole is provided with a camshaft. The conveying plates are rotatably connected to the housing through the camshaft. The connecting seat and the suction cup are moved up and down along with rotation of the camshaft. In a working state, the conveying plate is turned to a horizontal position, and the camshaft presses the connecting seat downward, so that the suction cup is firmly adhered to the ground to improve the working stability of the apparatus. When not in use, the conveying plate is turned from the horizontal position to a vertical position, and the camshaft is rotated to move the connecting seat upward, such that the suction cup is moved away the ground to lift the apparatus conveniently.

In the aforesaid technical solution, preferably, the handle gear is provided with a connecting shaft which is fitted and fixed to the handle. A side wall of the connecting shaft is provided with an annular engaging groove. The handle is provided with an axial locking device to be engaged with the annular engaging groove. The axial locking device comprises an engaging plate which is inserted into and removed from the annular engaging groove and a push button for controlling movement of the engaging plate. The push button is disposed on an outer wall of the handle and can be moved back and forth. By sliding the push button, the handle can be axially locked to the connecting shaft and unlocked from the connecting shaft, which facilitates the disassembly and assembly of the handle.

In the aforesaid technical solution, preferably, the handle has a positioning groove therein. The engaging plate is moved back and forth within the positioning groove. A baffle perpendicular to the direction of movement of the engaging plate is provided in the positioning groove. A restoring spring is provided between the engaging plate and the baffle. In a natural state, the engaging plate is engaged with the annular engaging groove.

In the aforesaid technical solution, the shift adjustment mechanism includes a shift adjustment knob, a shift adjustment shaft, and a shift driving key. The shift adjustment shaft is parallel to the first press roller. The shift driving key is fitted and fixed on two ends of the shift adjustment shaft and rotated along with the shift adjustment shaft. The shift driving key has more than two shift key surfaces. Axial distances between the different shift key surfaces and the shift adjustment shaft are different. The first sliding retainer at two ends of the first press roller is provided with a corresponding shift driven key. The shift driven key has a shift driven key surface. When the shift adjustment knob is rotated, the shift adjustment shaft is driven to rotate. Abutting surfaces of the shift key surface and the shift driven key surface generate a change.

In the aforesaid technical solution, preferably, the fine adjustment mechanism further includes a fine adjustment gear set. The fine adjustment gear set includes a pair of a first adjustment gear and a second adjustment gear to mesh with each other. The first fine adjustment gear is fixedly connected with the fine adjustment shaft. The second adjustment gear is connected with the housing or the positioning retainer.

In order to achieve the aforesaid object, a manual craft cutting machine can further be provided, comprising a housing, a press roller, a retainer, and a drive mechanism. The press roller is composed of a pair of a first press roller and a second press roller. The press rollers are disposed axially parallel to each other. Two ends of the press roller form a roller axle or extending in an axial direction of the press roller to form the roller axle. The roller axle is confined by the retainer.

The retainer comprises a positioning retainer and a sliding retainer. The positioning retainer is tightly connected with the housing. The positioning retainer is provided with a slide groove. The sliding retainer is inserted in the slide groove and movable along the slide groove. The sliding retainer comprises a first sliding retainer rotatably connected with the first press roller and a second sliding retainer rotatably connected with the second press roller.

The drive mechanism includes a handle and a gear set. The gear set includes a speed reduction gear set and a constant speed gear set. The speed reduction gear set includes a handle gear and a speed reduction gear to mesh with each other. The handle gear is rotated along with the handle. The speed reduction gear is connected with the first press roller or the second press roller to drive one of the two press rollers to rotate. The constant speed gear set includes a pair of a first constant speed gear and a second constant speed gear to mesh with each other. The constant speed gears are fixed on the roller axles of the first press roller and the second press roller, respectively. When one of the press rollers is driven by the speed reduction gear to rotate, the other press roller is driven by the constant speed gear to rotate at a constant speed.

The manual craft cutting machine further comprises a press roller spacing adjustment mechanism. The press roller spacing adjustment mechanism comprises a shift adjusting mechanism for adjusting a large spacing between the press rollers and a fine adjustment mechanism for adjusting a fine spacing between the press rollers. The shift adjustment mechanism drives the first sliding retainer to move along the slide groove. The fine adjustment mechanism drives the second sliding retainer to move along the slide groove.

In the aforesaid technical solution, a plurality of templates arranged in pairs are sandwiched between the press rollers. A pattern is provided on the templates. A pattern medium is sandwiched between the adjacent templates. The plurality of templates arranged in pairs are sandwiched between the press rollers. More than one pair of templates are superimposed each other, or only two templates are superimposed to meet a variety of usage.

In the aforesaid technical solution, a plurality of templates and backing plates attached to each other are sandwiched between the press rollers. The templates are provided with patterns thereon. At least one template and at least one backing plate are provided. The pattern medium is attached to at least one of the templates. The aforesaid technical solution includes the case of one template and one backing plate, the case of two templates and one backing plates, and the case of one template and two backing plates to meet various uses and good adaptability. When there is only one template and one backing plate, the pattern medium is located between the template and the backing plate. When there are two templates and one backing plate, the pattern medium is located between the two templates, and the backing plate is located outside the two templates and attached to one of the templates. When there is one template and two backing plates, the pattern media is attached to the template and located between the two backing plates.

Compared with the prior art, the present invention is provided with the positioning retainer, the sliding retainer, the shift adjustment mechanism and the fine adjustment mechanism. The press rollers are fixed on the sliding retainer, and the spacing between the press rollers can be adjusted through the shift adjustment mechanism and the fine adjustment mechanism to meet the specific requirements of various pattern mediums and pattern making, improving the efficiency of pattern making, reducing the cost of production tools, and improving the cleanness of the production environment.

### BRIEF DESCRIPTION OF THE DRAWINGS

FIG. 1 is a perspective view of a conventional manual craft cutting machine (seen from the direction of the handle);
FIG. 2 is a perspective view of the conventional manual craft cutting machine (seen from the direction of the handle, a half of the housing is removed);
FIG. 3 is a perspective view of the manual craft cutting machine of the present invention (seen from the direction opposite to the handle, a half of the housing is removed);
FIG. 4 is a perspective view of the manual craft cutting machine of the present invention (seen from the direction of the handle, the housing is removed);
FIG. 5 is an exploded view of the manual craft cutting machine of the present invention (seen from the direction opposite to the handle, the housing is removed);
FIG. 6 is an exploded view of the handle of the manual craft cutting machine of the present invention;
FIG. 7 is a schematic view showing the connection of the support legs of the manual craft cutting machine of the present invention;
FIG. 8 is an exploded view showing the connecting portion of the conveying plate and the housing of the manual craft cutting machine of the present invention (the upper portion of the conveying plate is removed); and
FIG. 9 is an exploded view of the gear rack and the gear shaft of the manual craft cutting machine of the present invention.

Description of reference numbers of the accompanying drawings:
(1) housing; (11) handle; (12) first press roller hole; (13) second press roller hole; (14) support leg; (2) handle; (3) positioning retainer; (31) first sliding retainer; (32) second sliding retainer; (321) fine adjustment turning wheel hole; (33) shift driven key; (34) return spring: (4) first press roller; (41) roller axle; (5) second press roller; (6) speed reduction gear set; (61) handle gear; (62) first speed reduction gear; (63) second speed reduction gear; (7) constant speed gear set; (71) first constant speed gear; (72) second constant speed gear; (8) shift adjustment knob; (81) shift adjustment shaft; (82) shift adjustment shaft support bearing; (83) bearing seat; (84) shift driving key; (841) shift key surface; (9) fine adjustment knob; (91) fine adjustment pinion; (92) fine adjustment gear; (93) locking gear; (931) sleeve; (94) push spring; (95) fine adjustment shaft; (96) fine adjustment shaft support bearing; (97) bearing seat; (98) fine adjustment turning wheel; (10) conveying plate; (101) connecting seat; (102) shaft hole; (103) camshaft; (104) connecting shaft; (105) annular engaging groove; (106) axial rib; (107) engaging plate; (108) push button; (109) positioning groove; (110) baffle; (111) restoring spring; (112) protrusion; (113) engaging recess; (114) buckle hole; (115) buckle; (1151) gear rack; (116) gear shaft

### DESCRIPTION OF THE PREFERRED EMBODIMENTS

Embodiments of the present invention will now be described, by way of example only, with reference to the accompanying drawings. It should be understood that these embodiments are only for further description of the present invention, and are not intended to limit the scope of the present invention.

Unless otherwise explicitly stated, throughout the specification and claims, the terms "comprises" and its variation such as "comprising" or "including" used herein specify the presence of stated features or components, but do not preclude the presence or addition of one or more other features or components.

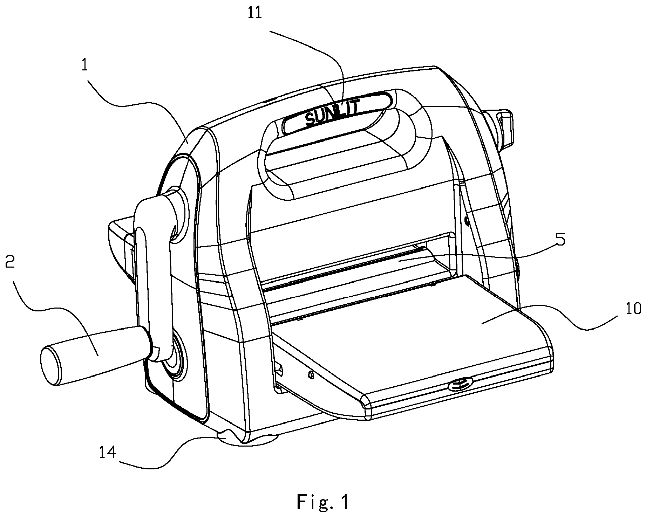

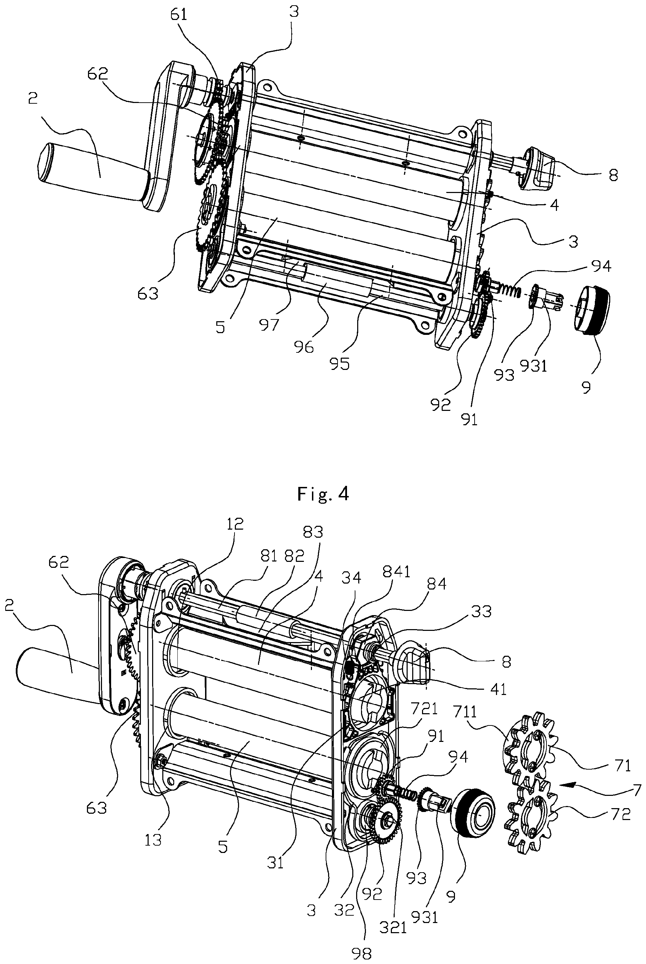

As shown in FIGS. 1, 2, 3, 4, and 5, a manual craft cutting machine comprises a housing 1, a template, a press roller, a retainer, a backing plate, and a drive mechanism. The housing 1 is composed of two thin housing to mate with each other. The upper portion of the housing is provided with a handle 11, which facilitates the handling of the whole device. The bottom of the housing 1 is provided with support legs 14 with a variable height. The template (not shown in the figures) includes a pair of upper and lower templates. A pattern medium (not shown in the figures) is sandwiched between the upper and lower templates. The upper template and the lower template are provided with concave and convex patterns which match with each other. The concave and convex patterns may be through cutting structures, or may be non-through embossing structures to abut against each other. One of the upper and lower templates may be a smooth plate not having a pattern. The press roller is composed of a pair of a first press roller 4 and a second press roller 5 (more than one pair of press rollers may be used in special situations). The press rollers are disposed axially parallel to each other. Two ends of the press roller form a roller axle or extend in the axial direction of the press roller to form the roller axle 41. The backing plate (not shown in the figures) is composed of a pair of backing plates attached to each other and sandwiched between the press rollers. The template is sandwiched between the backing plates. When the press rollers are rotated, the press rollers drive the backing plates to pass through the rolling surfaces of the press rollers. After the template is pressed by the press rollers, the pattern medium between the templates is pressed to generate a template pattern. Two sides of the housing 1 are provided with conveying plates 10. The conveying plates 10 are rotatably connected with the housing 1. When unfolded, the backing plates are placed on the conveying plates 10 and conveyed by the press rollers. In a non-working state, the conveying plates 10 are folded to abut against or close to the housing 11. The retainer comprises a positioning retainer 3 and a sliding retainer. The positioning retainer 3 is a paired housing structure. The side walls at both sides of the housing structure are vertical structures. The positioning retainer 3 is tightly connected with the housing 1 and disposed at the two ends of the press roller. The positioning retainer is provided with a slide groove. The slide groove is formed by the vertical side walls of the positioning retainer 3. The sliding retainer is inserted in the slide groove and moved along the slide groove. The sliding retainer comprises a first sliding retainer 31 rotatably connected with the first press roller 4 and a second sliding retainer 32 rotatably connected with the second press roller 5. The drive mechanism includes a handle 2 and a gear set. The gear set includes a speed reduction gear set 6 and a constant speed gear set 7. The speed reduction gear set 6 includes a handle gear 61 and a speed reduction gear set (or a single speed reduction gear) to mesh with each other. The speed reduction gear set includes a first reduction gear 62 and a second speed reduction gear 63. The handle gear 61 is rotated along with the handle 2. The second speed reduction gear 63 is connected with the second press roller 5 (in a different design, it may be connected with the first press roller 4) to drive the second press roller 5 to rotate. The constant speed gear set 7 includes a pair of a first constant speed gear 71 and a second constant speed gear 72 which are meshed with each other. The first constant speed gear and the second constant speed gear are fixed on the roller axles of the first press roller 4 and the second press roller 5, respectively. When the second press roller 5 is driven by the second speed reduction gear 63 to rotate, the first press roller 4 is driven by the first constant speed gear 71 to rotate at a constant speed. The present invention further comprises a press roller spacing adjustment mechanism. The press roller spacing adjustment mechanism comprises a shift adjusting mechanism for adjusting a large spacing between the press rollers and a fine adjustment mechanism for adjusting a fine spacing between the press rollers. The shift adjustment mechanism drives the first sliding retainer 31 to move along the slide groove, and the fine adjustment mechanism drives the second sliding retainer 32 to move along the slide groove, so that the spacing between the press rollers can be quickly and largely adjusted according to the needs, and a fine spacing adjustment can be achieved depending on the spacing between the temples and the stress requirement. The housing 1 is provided with a first press roller hole 12 and a second press roller hole 13 corresponding in position to the press rollers. The diameter of the first press roller hole 12 is greater than or equal to the sum of the diameter of the first press roller 4 and the shift adjustment displacement. The diameter of the second press roller hole 13 is greater than or equal to the sum of the diameter of the second press roller 5 and the fine adjustment displacement such that the adjustment of the press rollers is not affected by the housing 1.

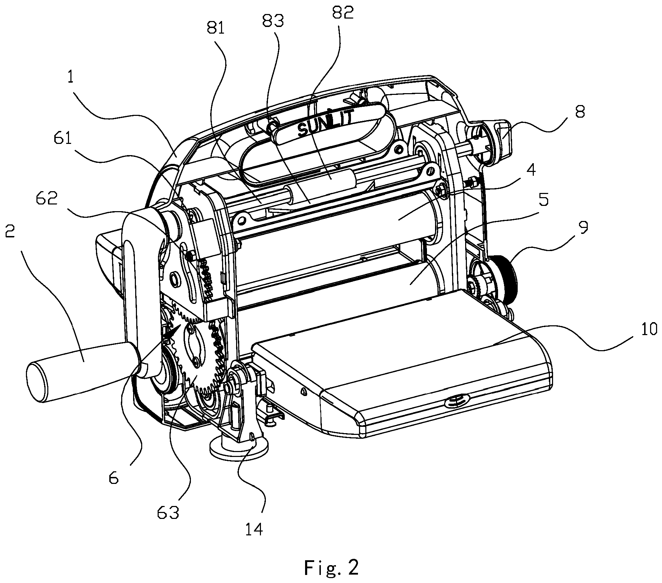

As shown in FIGS. 2, 3, 4, and 5, the shift adjustment mechanism includes a shift adjustment knob 8, a shift adjustment shaft 81, and a shift driving key 84. The shift adjustment shaft 81 is parallel to the first press roller 4. The shift driving key 84 is fitted and fixed on two ends of the shift adjustment shaft 81 and rotated along with the shift adjustment shaft 81. The shift driving key 84 has shift key surfaces 841. The number of the shift key surfaces 841 is usually two (or more than two). The axial distances between the different shift key surfaces 841 and the shift adjustment shaft 81 are different, corresponding to the change of the distance between the press rollers. The first sliding retainer 31 at the two ends of the first press roller 4 is provided with a corresponding shift driven key 33. The shift driven key 33 has a corresponding shift driven key surface. When the shift adjustment knob 8 is rotated, the shift adjustment shaft 81 is driven to rotate. The abutting surfaces of the shift key surface 841 and the shift driven key surface generate a change to adjust the spacing between the press rollers. The shift driven key 33 is separately provided and embedded in the surface of the first sliding retainer 3, which may be made of a hard wear-resistant material independently so as to ensure the rigidity and wear resistance of the shift driven key surface and reduce the material requirements of the entire first sliding retainer 31 to reduce the cost.

Further, as shown in FIGS. 2, 3, and 5, a shift adjustment shaft support seat is provided between the two ends of the shift adjustment shaft 81. The shift adjustment shaft support seat includes a shift adjustment shaft support bearing 82 and a bearing seat 83. The shift adjustment shaft support bearing 82 is sleeved on the outside of the shift adjustment shaft 81. The bearing seat 83 is a bearing bush structure formed by a curved groove. The outer curved surface of the shift adjustment shaft support bearing 82 is embedded in the bearing seat 83 and supported by the bearing seat 83, so that the shift adjustment shaft does not bend due to excessive stress when the press rollers are working.

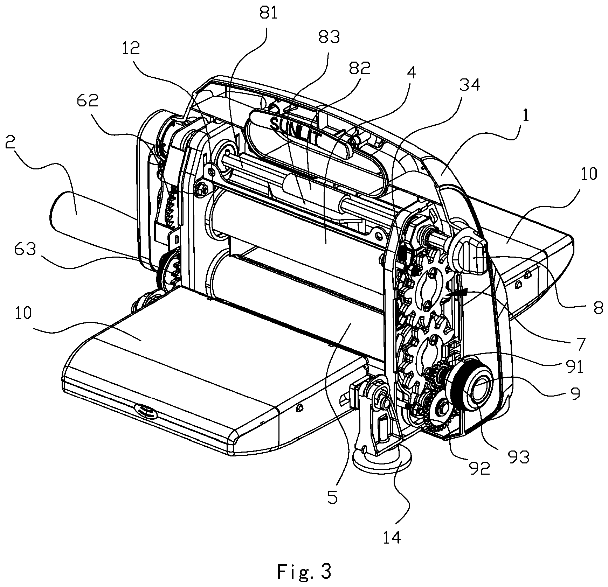

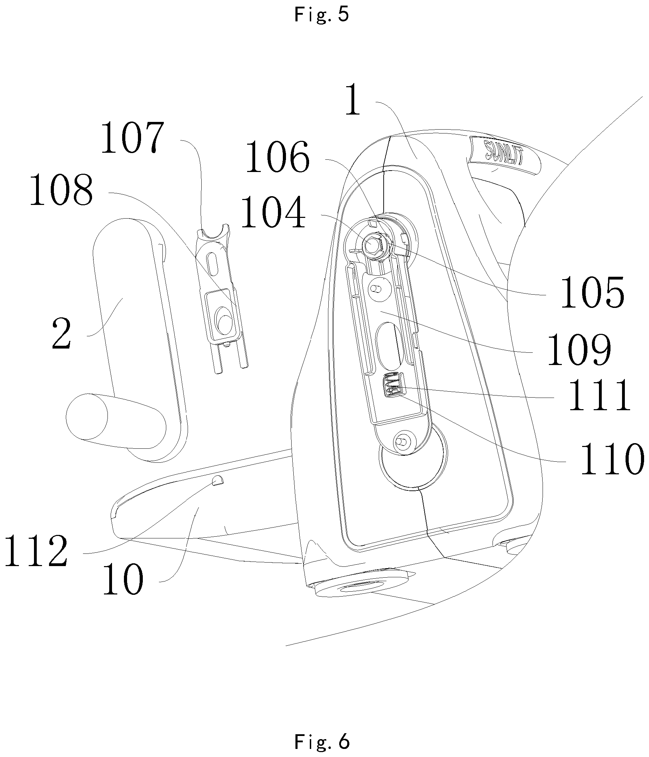

Furthermore, as shown in FIGS. 3 and 5, a return spring 34 is provided between the positioning retainer and the first sliding retainer 31, so that the shift key surface 841 and the shift driven key surface are always in stable contact with each other.

As shown in FIGS. 3, 4 and 5, the fine adjustment mechanism includes a fine adjustment knob 9, a fine adjustment shaft 95, and a fine adjustment turning wheel 98. The fine adjustment shaft 95 is parallel to the second press roller 5. The fine adjustment turning wheel 98 is sleeved and fixed on the two ends of the fine adjustment shaft 95 and rotated along with the fine adjustment shaft 95. The center axis of the fine adjustment turning wheel 98 is deviated from the axis of the fine adjustment shaft 95. The deviated distance corresponds to the fine adjustment distance of the press rollers. The second sliding retainer 32 is provided with a fine adjustment tuning wheel hole 321 for mounting the fine adjustment tuning wheel 98. The fine adjustment shaft 95 is driven by the fine adjustment knob 9 to rotate. The fine adjustment tuning wheel 98 drives the second sliding retainer 32 to move, corresponding to the slight distance change between the press rollers.

As shown in FIGS. 3, 4, and 5, the fine adjustment mechanism further includes a fine adjustment gear set. The fine adjustment gear set includes a pair of a fine adjustment gear 92 and a fine adjustment pinion 91 to mesh with each other. The fine adjustment gear 92 is fixedly connected with the fine adjustment shaft 95. The fine adjustment pinion 91 is connected with the positioning retainer 3 (or fixedly connected with the housing), so that the fine adjustment knob 9 reduces the force when the fine adjustment shaft 95 is driven, thereby improving the feeling of fine adjustment.

Furthermore, as shown in FIGS. 3, 4 and 5, a fine adjustment shaft support seat is provided between the two ends of the fine adjustment shaft 95. The fine adjustment shaft support seat includes a fine adjustment shaft support bearing 96 and a bearing seat 97. The fine adjustment shaft support bearing 96 is sleeved on the outside of the fine adjustment shaft 95. The bearing seat 97 is a bearing bush structure formed by a curved groove. The outer curved surface of the fine adjustment shaft support bearing 96 is embedded in the bearing seat 97 and supported by the bearing seat 97, so that the fine adjustment shaft does not bend due to excessive stress when the press rollers are working.

Further, as shown in FIGS. 3, 4 and 5, the fine adjustment knob 9 is provided with a locking gear 93. A sleeve 931 is axially disposed on the locking gear 93. One end of the sleeve 931 is axially connected and locked to the fine adjustment knob 9. The axle of the fine adjustment pinion 91 is fitted in the sleeve 931. The fine adjustment pinion 91 and the locking gear 93 are coaxially connected. The positioning retainer (or the housing) is provided with a fine adjustment locking groove (not shown in the figures). The shape of the fine adjustment locking groove is matched with the locking gear 93. A push spring 94 is provided in the sleeve 931. When the fine adjustment knob 9 is adjusted, the fine adjustment knob 9 compresses the push spring 94 and the fine adjustment knob 9 pushes the locking gear 93 to move axially, so that the locking gear 93 is detached from the fine adjustment locking groove to be unlocked. At this time, the fine adjustment shaft 95 can be rotated to adjust the second press roller 5. When the adjustment is completed, the fine adjustment knob 9 is released. Under the driving force of the push spring 94, the locking gear 93 slides axially along with the fine adjustment knob 9 and is inserted in the fine adjustment locking groove again so that the second press roller 5 is kept in a locked state.

As shown in FIGS. 2, 3, 4, and 5, the gears of the speed reduction gear set and the constant speed gear set are formed by stamping a thin metal plate. The gear may be formed by two separately stamped gears which are superimposed and connected (more superimposition may be performed as needed), so that the cost of the gear can be lowered while meeting performance requirements.

The present invention is provided with the positioning retainer 3, the sliding retainer, the shift adjustment mechanism and the fine adjustment mechanism. The press rollers are fixed on the sliding retainer, and the spacing between the press rollers can be adjusted through the shift adjustment mechanism and the fine adjustment mechanism to meet the specific requirements of various pattern mediums and pattern making, improving the efficiency of pattern making, reducing the cost of production tools, and improving the cleanness of the production environment.

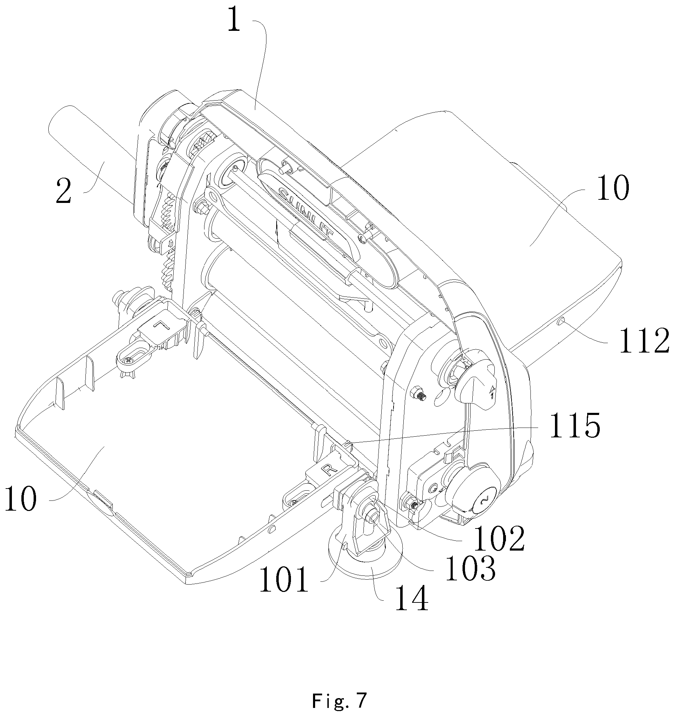

Furthermore, as shown in FIG. 7, the bottom of the housing 1 is provided with support legs 14. Each support leg 14 includes a suction cup that can be moved up and down. The upper portion of the suction cup is fixedly provided with a connecting seat 101. The connecting seat 101 is disposed inside the housing 1. One end of the connecting seat 101 is provided with a shaft hole 102. The shaft hole 102 is provided with a camshaft 103. The conveying plate 10 is rotatably connected to the housing 1 through the camshaft 103. The connecting seat 101 is moved up and down along with rotation of the camshaft 103. In a working state, the conveying plate 10 is turned to a horizontal position, and the camshaft 103 presses the connecting seat 101 and the suction cup downward, so that the suction cup is to press the ground. The air in the suction cup is exhausted so that the suction cup is firmly adhered to the ground to improve the working stability of the apparatus. When not in use, the conveying plate 10 is turned from the horizontal position to a vertical position, the camshaft 103 is rotated to move the connecting seat 101 and the suction cup upward, such that the suction cup is moved away the ground to lift the apparatus easily.

In addition, as shown in FIG. 6, the handle gear 61 is provided with a connecting shaft 104 which is fitted and fixed to the handle 2. The side wall of the connecting shaft 104 is provided with an annular engaging groove 105 and an axial rib 106. The handle 2 is fitted on the connecting shaft 104 and engaged with the axial rib 106 to achieve synchronous rotation. The handle 2 is provided with an axial locking device to be engaged with the annular engaging groove 105. The axial locking device comprises an engaging plate 107 which is inserted into and removed from the annular engaging groove 105 and a push button 108 for controlling the movement of the engaging plate. The push button 108 is integrally formed with the engaging plate 107. The push button 108 is disposed on the outer wall of the handle 2 and can be moved back and forth. The handle 2 has a positioning groove 109 therein. The engaging plate 107 is moved back and forth within the positioning groove 109. A baffle 110 perpendicular to the direction of movement of the engaging plate is provided in the positioning groove 109. A restoring spring 111 is provided between the engaging plate 107 and the baffle 110. In the natural state, the engaging plate 107 is biased by the restoring spring 111 to be engaged with the annular engaging groove 105. The handle 2 is not easy to fall off under normal use. When not in use, the push button 108 is pushed to disengage the engaging plate 107 from the annular engaging groove 105. The handle 2 is moved in the axial direction of the connecting shaft 104 to separate the handle 2 from the connecting shaft 104. It is convenient for disassembly and assembly and replacement.

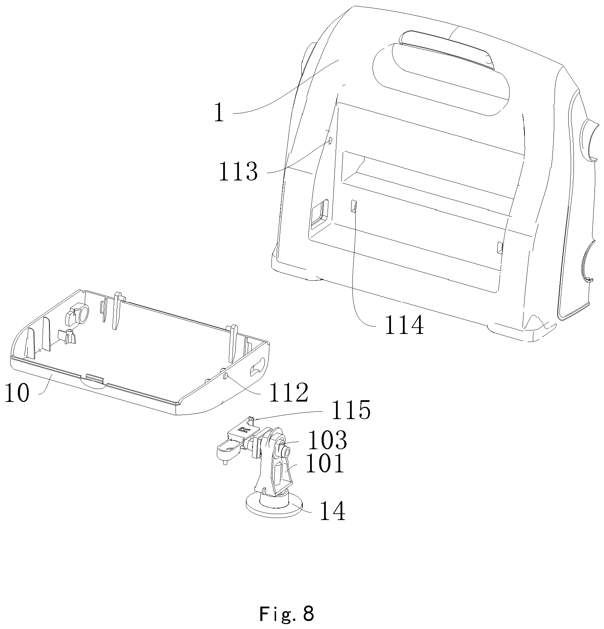

As shown in FIG. 8, two side walls of each conveying plate 10 are provided with protrusions 112. The housing 1 is provided with engaging recesses 113 corresponding to the protrusions 112. When the craft cutting machine is not used, the conveying plates 10 are turned to the vertical position and are in contact with the housing 1. The protrusions 112 are engaged with the engaging recesses 113 to lock the conveying plates 10, so that the conveying plates 10 won't rotate automatically. The storage is convenient, the connection is stable, and the service life is long.

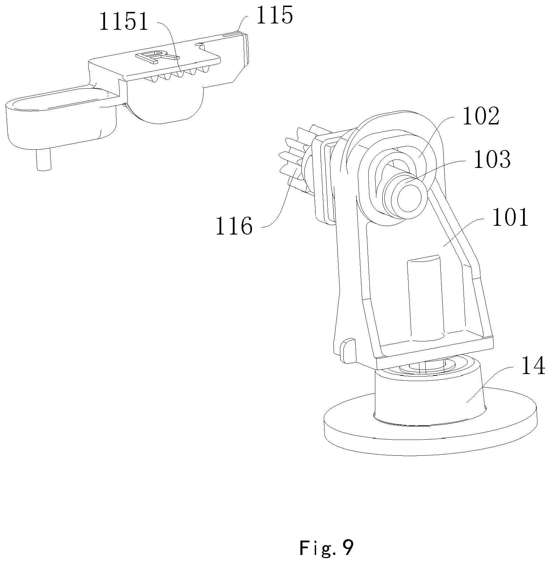

As shown in FIGS. 8 and 9, the bottom of each conveying plate 10 is provided with a retractable buckle 115. The side wall of the housing 1 is formed with a buckle hole 114 for engaging with the buckle 115. When the conveying plate 10 is in the horizontal position, the buckle 115 extends out of the outer wall of the conveying plate 10 to be engaged in the buckle hole 114 so that the conveying plate 10 is locked at the horizontal position. When in use, the conveying plate 10 won't be turned easily so as to improve the connection stability between the conveying plate 10 and the housing 1 for the user to use the craft cutting machine. The buckle 115 is integrally formed with a gear rack 1151 located inside the conveying plate 10. The inside of the conveying plate 10 is provided with a gear shaft 116 located at the rotation axis and meshed with the gear rack 1151. When the conveying plate 10 is in the vertical position, the buckle 115 is located in the conveying plate 10. When the conveying plate 10 is turned from the vertical position to the horizontal position, the gear rack 1151 meshes with the gear shaft 116, and the buckle 115 gradually extends out of the conveying plate 10 until it is engaged in the buckle hole 114 to lock the conveying plate 10. When the craft cutting machine is not used, the conveying plate 10 is turned, the gear rack 1151 meshes with the gear shaft 116, and the buckle 115 is retracted into the conveying plate 10. The present invention has the advantages of compact structure and stable connection, which is beautiful and practical.

The foregoing descriptions of specific exemplary embodiments of the present invention have been presented for the purposes of illustration and description. These descriptions do not intend to limit the invention to the precise form disclosed. It is obvious that many changes and modifications are possible based on the above teachings. The purpose of selecting and describing the exemplary embodiments is to explain the specific principles of the invention and its practical application so that those skilled in the art will be able to implement and use various different exemplary embodiments and various alternatives and changes of the present invention. Various modifications and enhancements may be made without departing from the scope of the present invention as defined by the appended claims.

## Claims

1. A manual craft cutting machine, comprising a housing (1), a press roller, a retainer, and a drive mechanism; the press roller being composed of a pair of a first press roller (4) and a second press roller (5), the press rollers being disposed axially parallel to each other, two ends of the press roller forming a roller axle (41) or extending in an axial direction of the press roller to form the roller axle (41), the roller axle (41) being confined by the retainer;
wherein the retainer comprises a positioning retainer (3) and a sliding retainer, the positioning retainer (3) is tightly connected with the housing (1) and disposed at the two ends of the press roller, the positioning retainer (3) is provided with a slide groove; the sliding retainer is inserted in the slide groove and movable along the slide groove, the sliding retainer comprises a first sliding retainer (31) rotatably connected with the first press roller (4) and a second sliding retainer (32) rotatably connected with the second press roller (5);
the drive mechanism includes a handle (2) and a gear set; the gear set includes a speed reduction gear set (6) and a constant speed gear set (7), the speed reduction gear set (6) includes a handle gear (61) and a speed reduction gear to mesh with each other, the handle gear (61) is rotated along with the handle (2), the speed reduction gear is connected with the first press roller (4) or the second press roller (5) to drive one of the two press rollers to rotate; the constant speed gear set (7) includes a pair of a first constant speed gear (71) and a second constant speed gear (72) to mesh with each other, the constant speed gears are fixed on the roller axles of the first press roller (4) and the second press roller (5) respectively, when one of the press rollers is driven by the speed reduction gear to rotate, the other press roller is driven by the first constant speed gear (71) or the second constant speed gear (72) to rotate at a constant speed;
**characterized in that**
the manual craft cutting machine further comprises a press roller spacing adjustment mechanism, the press roller spacing adjustment mechanism comprises a shift adjusting mechanism for adjusting a large spacing between the press rollers and a fine adjustment mechanism for adjusting a fine spacing between the press rollers, the shift adjustment mechanism drives the first sliding retainer (31) to move along the slide groove, the fine adjustment mechanism drives the second sliding retainer (32) to move along the slide groove.

2. The manual craft cutting machine as claimed in claim 1, wherein the manual craft cutting machine comprises a template and a backing plate, wherein the template includes a pair of upper and lower templates, a pattern medium being sandwiched between the upper and lower templates, and wherein the backing plate is composed of a pair of backing plates attached to each other and sandwiched between the press rollers, the template being sandwiched between the backing plates, and wherein the positioning retainer (3) is disposed at the two ends of the press roller.

3. The manual craft cutting machine as claimed in claim 2, wherein the shift adjustment mechanism includes a shift adjustment knob (8), a shift adjustment shaft (81) and a shift driving key (84), the shift adjustment shaft (81) is parallel to the first press roller (4), the shift driving key (84) is fitted and fixed on two ends of the shift adjustment shaft (81) and rotated along with the shift adjustment shaft (81), the shift driving key (84) has shift key surfaces (841), the number of the shift key surfaces (841) is two, axial distances between the different shift key surfaces (841) and the shift adjustment shaft (81) are different; the first sliding retainer (31) at two ends of the first press roller (4) is provided with a corresponding shift driven key (33), the shift driven key (33) has a corresponding shift driven key surface, when the shift adjustment knob (8) is rotated, the shift adjustment shaft (81) is driven to rotate; and abutting surfaces of the shift key surface (841) and the shift driven key surface generate a change.

4. The manual craft cutting machine as claimed in claim 3, wherein a shift adjustment shaft support seat is provided between the two ends of the shift adjustment shaft (81) or
wherein the shift driven key (33) is separately provided and embedded in a surface of the first sliding retainer (3) or wherein the gears of the speed reduction gear set and the constant speed gear set are formed by stamping a thin metal plate.

5. The manual craft cutting machine as claimed in claim 3, wherein the positioning retainer (3) is a paired housing structure, side walls at both sides of the housing structure are vertical structures, and the side walls form the slide groove, and wherein preferably a return spring (34) is provided between the positioning retainer and the first sliding retainer (31).

6. The manual craft cutting machine as claimed in claim 3, wherein the fine adjustment mechanism includes a fine adjustment knob (9), a fine adjustment shaft (95) and a fine adjustment turning wheel (98), the fine adjustment shaft (95) is parallel to the second press roller (5), the fine adjustment turning wheel (98) is sleeved and fixed on two ends of the fine adjustment shaft (95) and rotated along with the fine adjustment shaft (95), a center axis of the fine adjustment turning wheel (98) is deviated from an axis of the fine adjustment shaft (95), and the second sliding retainer (32) is provided with a fine adjustment turning wheel hole (321) for mounting the fine adjustment turning wheel (98).

7. The manual craft cutting machine as claimed in claim 6, wherein the fine adjustment mechanism further includes a fine adjustment gear set, the fine adjustment gear set includes a pair of a fine adjustment gear (92) and a fine adjustment pinion (91) to mesh with each other, the fine adjustment gear (92) is fixedly connected with the fine adjustment shaft (95), and the fine adjustment pinion (91) is connected with the housing (1) or the positioning retainer (3).

8. The manual craft cutting machine as claimed in claim 7, wherein a fine adjustment shaft support seat is provided between the two ends of the fine adjustment shaft (95).

9. The manual craft cutting machine as claimed in claim 8, wherein the fine adjustment knob (9) is provided with a locking gear (93), a sleeve (931) is axially disposed on the locking gear (93), one end of the sleeve (931) is axially connected to the fine adjustment knob (9), an axle of the fine adjustment pinion (91) is fitted in the sleeve (931), the fine adjustment pinion (91) and the locking gear (93) are coaxially connected, the housing (1) or the positioning retainer (3) is provided with a fine adjustment locking groove, the fine adjustment locking groove has a shape matched with the locking gear (93), and a push spring (94) is provided in the sleeve (931).

10. The manual craft cutting machine as claimed in claim 1, further comprising one or more backing plates attached to each other, the backing plate being sandwiched between the first press roller (4) or the second press roller (5).

11. The manual craft cutting machine as claimed in claim 1, wherein the shift adjustment mechanism includes a shift adjustment knob (8), a shift adjustment shaft (81) and a shift driving key (84), the shift adjustment shaft (81) is parallel to the first press roller (4), the shift driving key (84) is sleeved and fixed on two ends of the shift adjustment shaft (81) and rotated along with the shift adjustment shaft (81), the shift driving key (84) has more than two shift key surfaces (841), axial distances between the different shift key surfaces (841) and the shift adjustment shaft (81) are different; the first sliding retainer (31) at two ends of the first press roller (4) is provided with a corresponding shift driven key surface, when the shift adjustment knob (8) is rotated, the shift adjustment shaft (81) is driven to rotate; and abutting surfaces of the shift key surface (841) and the shift driven key surface generate a change.

12. The manual craft cutting machine as claimed in claim 1 or 2, wherein two sides of the housing (1) are provided with conveying plates (10), and the conveying plates (10) are rotatably connected with the housing (1).

13. The manual craft cutting machine as claimed in claim 12, wherein a bottom of the housing (1) is provided with support legs (14), the support legs (14) each include a suction cup that can be moved up and down; an upper portion of the suction cup is fixedly connected with a connecting seat (101), the connecting seat (101) is disposed inside the housing (1); one end of the connecting seat (101) is provided with a shaft hole (102), the shaft hole (102) is provided with a camshaft (103), the conveying plates (10) are rotatably connected to the housing (1) through the camshaft (103); the connecting seat (101) and the suction cup are moved up and down along with rotation of the camshaft (103).

14. The manual craft cutting machine as claimed in claim 1 or 2, wherein the handle gear (61) is provided with a connecting shaft (104) which is fitted and fixed to the handle (2), a side wall of the connecting shaft (104) is provided with an annular engaging groove (105); the handle (2) is provided with an axial locking device to be engaged with the annular engaging groove (105), the axial locking device comprises an engaging plate (107) which is inserted into and removed from the annular engaging groove (105) and a push button (108) for controlling movement of the engaging plate (107), and the push button (108) is disposed on an outer wall of the handle (2) and can be moved back and forth and wherein preferably the handle (2) has a positioning groove (109) therein, the engaging plate (107) is moved back and forth within the positioning groove (109); a baffle (110) perpendicular to the direction of movement of the engaging plate (107) is provided in the positioning groove (109), a restoring spring (111) is provided between the engaging plate (107) and the baffle (110); in a natural state, the engaging plate (107) is engaged with the annular engaging groove (105).

15. The manual craft cutting machine as claimed in claim 6, wherein the fine adjustment mechanism further includes a fine adjustment gear set, the fine adjustment gear set includes a pair of a first adjustment gear and a second adjustment gear to mesh with each other, the first fine adjustment gear is fixedly connected with the fine adjustment shaft (95), and the second adjustment gear is connected with the housing (1) or the positioning retainer (3).

## Patentansprüche

1. Manuelle handwerkliche Schneidemaschine, umfassend ein Gehäuse (1), eine Presswalze, einen Halter und einen Antriebsmechanismus; wobei die Presswalze aus einem Paar von einer ersten Presswalze (4) und einer zweiten Presswalze (5) gebildet ist, wobei die Presswalzen achsparallel zueinander angeordnet sind, wobei zwei Enden der Presswalze eine Walzenachse (41) bilden oder sich in einer axialen Richtung der Presswalze erstrecken, um die Walzenachse (41) zu bilden, wobei die Walzenachse (41) durch den Halter begrenzt ist,
wobei der Halter einen Positionierungshalter (3) und einen Gleithalter umfasst, der Positionierungshalter (3) fest mit dem Gehäuse (1) verbunden ist und an den beiden Enden der Presswalze angeordnet ist, der Positionierungshalter (3) mit einer Gleitnut versehen ist; der Gleithalter in die Gleitnut eingesetzt ist und entlang der Gleitnut beweglich ist, der Gleithalter einen ersten Gleithalter (31), der drehbar mit der ersten Presswalze (4) verbunden ist, und einen zweiten Gleithalter (32), der drehbar mit der zweiten Presswalze (5) verbunden ist, umfasst;
der Antriebsmechanismus einen Griff (2) und einen Getriebesatz beinhaltet; der Getriebesatz einen Geschwindigkeitsreduktionsgetriebesatz (6) und einen Konstantgeschwindigkeitsgetriebesatz (7) beinhaltet, der Geschwindigkeitsreduktionsgetriebesatz (6) ein Griffgetriebe (61) und ein Geschwindigkeitsreduktionsgetriebe beinhaltet, die miteinander in Eingriff stehen können, das Griffgetriebe (61) zusammen mit dem Griff (2) gedreht wird, das Geschwindigkeitsreduktionsgetriebe mit der ersten Presswalze (4) oder der zweiten Presswalze (5) verbunden ist, um eine der beiden Presswalzen anzutreiben, sich zu drehen; der Konstantgeschwindigkeitsgetriebesatz (7) ein Paar eines ersten Konstantgeschwindigkeitsgetriebes (71) und eines zweiten Konstantgeschwindigkeitsgetriebes (72) beinhaltet, die miteinander in Eingriff stehen können, die Konstantgeschwindigkeitsgetriebe an den Walzenachsen der ersten Presswalze (4) bzw. der zweiten Presswalze (5) befestigt sind, wenn eine der Presswalzen durch das Geschwindigkeitsreduktionsgetriebe angetrieben wird, sich zu drehen, die andere Presswalze durch das erste Konstantgeschwindigkeitsgetriebe (71) oder durch das zweite Konstantgeschwindigkeitsgetriebe (72) angetrieben wird, sich mit einer konstanten Geschwindigkeit zu drehen;
**dadurch gekennzeichnet, dass**
die manuelle handwerkliche Schneidemaschine ferner einen Presswalzenabstandseinstellmechanismus umfasst, wobei der Presswalzenabstandseinstellmechanismus einen Verschiebeeinstellmechanismus zum Einstellen eines großen Abstands zwischen den Presswalzen und einen Feineinstellungsmechanismus zum Einstellen eines feinen Abstands zwischen den Presswalzen umfasst, der Verschiebeeinstellmechanismus den ersten Gleithalter (31) antreibt, sich entlang der Gleitnut zu bewegen, der Feineinstellungsmechanismus den zweiten Gleithalter (32) antreibt, sich entlang der Gleitnut zu bewegen.

2. Manuelle handwerkliche Schneidemaschine gemäß Anspruch 1, wobei die manuelle handwerkliche Schneidemaschine eine Schablone und eine Trägerplatte umfasst, wobei die Schablone ein Paar von oberen und unteren Schablonen beinhaltet, wobei ein Mustermedium zwischen den oberen und unteren Schablonen angeordnet ist, und wobei die Trägerplatte aus einem Paar von Trägerplatten besteht, die aneinander befestigt sind und zwischen den Presswalzen angeordnet sind, wobei die Schablone zwischen den Trägerplatten angeordnet ist, und wobei der Positionierungshalter (3) an den beiden Enden der Presswalze angeordnet ist.

3. Manuelle handwerkliche Schneidemaschine gemäß Anspruch 2, wobei der Verschiebeeinstellmechanismus einen Verschiebeeinstellknopf (8), eine Verschiebeeinstellwelle (81) und eine Verschiebeantriebstaste (84) umfasst, die Verschiebeeinstellwelle (81) parallel zu der ersten Pressrolle (4) ist, die Verschiebeantriebstaste (84) an zwei Enden der Verschiebeeinstellwelle (81) eingepasst und befestigt ist und zusammen mit der Verschiebeeinstellwelle (81) gedreht wird, die Verschiebeantriebstaste (84) Verschiebetastenflächen (841) aufweist, die Anzahl der Verschiebetastenflächen (841) zwei ist, axiale Abstände zwischen den verschiedenen Verschiebetastenflächen (841) und der Verschiebeeinstellwelle (81) unterschiedlich sind; der erste Gleithalter (31) an zwei Enden der ersten Presswalze (4) mit einer entsprechenden verschiebegetriebenen Taste (33) versehen ist, die verschiebegetriebene Taste (33) eine entsprechende verschiebegetriebene Tastenfläche aufweist, wenn der Verschiebeeinstellknopf (8) gedreht wird, die Verschiebeeinstellwelle (81) angetrieben wird, sich zu drehen; und Stoßflächen der Verschiebetastenfläche (841) und der verschiebegetriebenen Tastenfläche eine Änderung erzeugen.

4. Manuelle handwerkliche Schneidemaschine gemäß Anspruch 3, wobei ein Verschiebeeinstellwellenstützsitz zwischen den beiden Enden der Verschiebeeinstellwelle (81) vorgesehen ist, oder
wobei die verschiebegetriebene Taste (33) separat vorgesehen und in eine Oberfläche des ersten Gleithalters (3) eingebettet ist, oder wobei die Getriebe des Geschwindigkeitsreduktionsgetriebesatzes und des Konstantgeschwindigkeitsgetriebesatzes durch Stanzen einer dünnen Metallplatte ausgebildet sind.

5. Manuelle handwerkliche Schneidemaschine gemäß Anspruch 3, wobei der Positionierungshalter (3) eine gepaarte Gehäusestruktur ist, Seitenwände an beiden Seiten der Gehäusestruktur vertikale Strukturen sind und die Seitenwände die Gleitnut bilden, und wobei bevorzugt eine Rückstellfeder (34) zwischen dem Positionierungshalter und dem ersten Gleithalter (31) vorgesehen ist.

6. Manuelle handwerkliche Schneidemaschine gemäß Anspruch 3, wobei der Feineinstellungsmechanismus einen Feineinstellungsknopf (9), eine Feineinstellungswelle (95) und ein Feineinstellungsdrehrad (98) umfasst, die Feineinstellungswelle (95) parallel zu der zweiten Presswalze (5) ist, das Feineinstellungsdrehrad (98) an zwei Enden der Feineinstellungswelle (95) hülsenförmig angeordnet und befestigt ist und zusammen mit der Feineinstellungswelle (95) gedreht wird, eine Mittelachse des Feineinstellungsdrehrads (98) von einer Achse der Feineinstellungswelle (95) abweicht und der zweite Gleithalter (32) mit einem Feineinstellungsdrehradloch (321) zum Befestigen des Feineinstellungsdrehrads (98) versehen ist.

7. Manuelle handwerkliche Schneidemaschine gemäß Anspruch 6, wobei der Feineinstellungsmechanismus ferner einen Feineinstellungsgetriebesatz beinhaltet, der Feineinstellungsgetriebesatz ein Paar eines Feineinstellungsgetriebes (92) und eines Feineinstellungsritzels (91) beinhaltet, die miteinander in Eingriff stehen können, das Feineinstellungsgetriebe (92) fest mit der Feineinstellungswelle (95) verbunden ist und das Feineinstellungsritzel (91) mit dem Gehäuse (1) oder dem Positionierungshalter (3) verbunden ist.

8. Manuelle handwerkliche Schneidemaschine gemäß Anspruch 7, wobei ein Feineinstellungswellenstützsitz zwischen den beiden Enden der Feineinstellungswelle (95) vorgesehen ist.

9. Manuelle handwerkliche Schneidemaschine gemäß Anspruch 8, wobei der Feineinstellungsknopf (9) mit einem Sperrgetriebe (93) versehen ist, eine Hülse (931) axial an dem Sperrgetriebe (93) angeordnet ist, ein Ende der Hülse (931) axial mit dem Feineinstellungsknopf (9) verbunden ist, eine Achse des Feineinstellungsritzels (91) in die Hülse (931) eingepasst ist, das Feineinstellungsritzel (91) und das Sperrgetriebe (93) koaxial verbunden sind, das Gehäuse (1) oder der Positionierungshalter (3) mit einer Feineinstellungssperrnut versehen ist, die Feineinstellungssperrnut eine Form aufweist, die mit dem Sperrgetriebe (93) übereinstimmt, und eine Druckfeder (94) in der Hülse (931) vorgesehen ist.

10. Manuelle handwerkliche Schneidemaschine gemäß Anspruch 1, ferner umfassend eine oder mehrere aneinander befestigte Trägerplatten, wobei die Trägerplatte zwischen der ersten Presswalze (4) oder der zweiten Presswalze (5) angeordnet ist.

11. Manuelle handwerkliche Schneidemaschine gemäß Anspruch 1, wobei der Verschiebeeinstellmechanismus einen Verschiebeeinstellknopf (8), eine Verschiebeeinstellwelle (81) und eine Verschiebeantriebstaste (84) beinhaltet, die Verschiebeeinstellwelle (81) parallel zu der ersten Presswalze (4) ist, die Verschiebeantriebstaste (84) hülsenförmig und an zwei Enden der Verschiebeeinstellwelle (81) befestigt ist und zusammen mit der Verschiebeeinstellwelle (81) gedreht wird, die Verschiebeantriebstaste (84) mehr als zwei Verschiebetastenflächen (841) aufweist, axiale Abstände zwischen den verschiedenen Verschiebetastenflächen (841) und der Verschiebeeinstellwelle (81) unterschiedlich sind; der erste Gleithalter (31) an zwei Enden der ersten Presswalze (4) mit einer entsprechenden verschiebegetriebenen Tastenfläche versehen ist, wenn der Verschiebeeinstellknopf (8) gedreht wird, die Verschiebeeinstellwelle (81) angetrieben wird, sich zu drehen; und Stoßflächen der Verschiebetastenfläche (841) und der verschiebegetriebenen Tastenfläche eine Änderung erzeugen.

12. Manuelle handwerkliche Schneidemaschine gemäß Anspruch 1 oder 2, wobei zwei Seiten des Gehäuses (1) mit Förderplatten (10) versehen sind und die Förderplatten (10) drehbar mit dem Gehäuse (1) verbunden sind.

13. Manuelle handwerkliche Schneidemaschine gemäß Anspruch 12, wobei ein Boden des Gehäuses (1) mit Stützbeinen (14) versehen ist, die Stützbeine (14) jeweils einen Saugnapf beinhalten, der nach oben und unten bewegt werden kann; ein oberer Bereich des Saugnapfes fest mit einem Verbindungssitz (101) verbunden ist, der Verbindungssitz (101) innerhalb des Gehäuses (1) angeordnet ist; ein Ende des Verbindungssitzes (101) mit einem Wellenloch (102) versehen ist, das Wellenloch (102) mit einer Nockenwelle (103) versehen ist, die Förderplatten (10) durch die Nockenwelle (103) drehbar mit dem Gehäuse (1) verbunden sind; der Verbindungssitz (101) und der Saugnapf zusammen mit der Drehung der Nockenwelle (103) nach oben und unten bewegt werden.

14. Manuelle handwerkliche Schneidemaschine gemäß Anspruch 1 oder 2, wobei das Griffgetriebe (61) mit einer Verbindungswelle (104) versehen ist, die an dem Griff (2) eingepasst und befestigt ist, eine Seitenwand der Verbindungswelle (104) mit einer ringförmigen Eingriffsnut (105) versehen ist; der Griff (2) mit einer axialen Verriegelungsvorrichtung versehen ist, um mit der ringförmigen Eingriffsnut (105) in Eingriff gebracht zu werden, die axiale Verriegelungsvorrichtung eine Eingriffsplatte (107), die in die ringförmige Eingriffsnut (105) eingeführt und aus dieser entfernt wird, und einen Druckknopf (108) zum Steuern der Bewegung der Eingriffsplatte (107) umfasst, und der Druckknopf (108) an einer Außenwand des Griffs (2) angeordnet ist und vor und zurück bewegt werden kann,
und wobei der Griff (2) bevorzugt eine Positionierungsnut (109) darin aufweist, die Eingriffsplatte (107) innerhalb der Positionierungsnut (109) vor und zurück bewegt wird; eine Ablenkplatte (110) senkrecht zu der Bewegungsrichtung der Eingriffsplatte (107) in der Positionierungsnut (109) vorgesehen ist, eine Rückstellfeder (111) zwischen der Eingriffsplatte (107) und der Ablenkplatte (110) vorgesehen ist; in einem natürlichen Zustand die Eingriffsplatte (107) mit der ringförmigen Eingriffsnut (105) in Eingriff steht.

15. Manuelle handwerkliche Schneidemaschine gemäß Anspruch 6, wobei der Feineinstellungsmechanismus ferner einen Feineinstellungsgetriebesatz beinhaltet, der Feineinstellungsgetriebesatz ein Paar eines ersten Einstellungsgetriebes und eines zweiten Einstellungsgetriebes beinhaltet, die miteinander zu in Eingriff stehen können, das erste Feineinstellungsgetriebe fest mit der Feineinstellungswelle (95) verbunden ist und das zweite Einstellungsgetriebe mit dem Gehäuse (1) oder dem Positionierungshalter (3) verbunden ist.

## Revendications

1. Machine à découper manuelle pour l'artisanat, comprenant un boîtier (1), un rouleau de pression, un moyen de retenue et un mécanisme d'entraînement ; le rouleau de pression étant constitué d'une paire composée d'un premier rouleau de pression (4) et d'un deuxième rouleau de pression (5), les rouleaux de pression étant disposés de façon axialement parallèle l'un par rapport à l'autre, deux extrémités du rouleau de pression formant un axe de rouleau (41) ou s'étendant dans une direction axiale du rouleau de pression pour former l'axe de rouleau (41), l'axe de rouleau (41) étant confiné par le moyen de retenue ;
dans laquelle le moyen de retenue comprend un moyen de retenue de positionnement (3) et un moyen de retenue coulissant, le moyen de retenue de positionnement (3) est relié étroitement au boîtier (1) et disposé aux deux extrémités du rouleau de pression, le moyen de retenue de positionnement (3) est doté d'une rainure de coulissement ; le moyen de retenue coulissant est inséré dans la rainure de coulissement et déplaçable le long de la rainure de coulissement, le moyen de retenue coulissant comprend un premier moyen de retenue coulissant (31) relié de façon rotative au premier rouleau de pression (4) et un deuxième moyen de retenue coulissant (32) relié de façon rotative au deuxième rouleau de pression (5) ;
le mécanisme d'entraînement inclut une poignée (2) et un jeu d'engrenages ; le jeu d'engrenages inclut un jeu d'engrenages de réduction de vitesse (6) et un jeu d'engrenages à vitesse constante (7), le jeu d'engrenages de réduction de vitesse (6) inclut un engrenage de poignée (61) et un engrenage de réduction de vitesse destinés à engrener l'un avec l'autre, l'engrenage de poignée (61) tourne conjointement avec la poignée (2), l'engrenage de réduction de vitesse est relié au premier rouleau de pression (4) ou au deuxième rouleau de pression (5) pour entraîner l'un des deux rouleaux de pression en rotation ; le jeu d'engrenages à vitesse constante (7) inclut une paire composée d'un premier engrenage à vitesse constante (71) et d'un deuxième engrenage à vitesse constante (72) destinés à engrener l'un avec l'autre, les engrenages à vitesse constante sont fixés sur les axes de rouleau du premier rouleau de pression (4) et du deuxième rouleau de pression (5) respectivement, lorsque l'un des rouleaux de pression est entraîné en rotation par l'engrenage de réduction de vitesse, l'autre rouleau de pression est entraîné en rotation à une vitesse constante par le premier engrenage à vitesse constante (71) ou le deuxième engrenage à vitesse constante (72) ;
**caractérisée en ce que**
la machine à découper manuelle pour l'artisanat comprend en outre un mécanisme de réglage de l'espacement entre les rouleaux de pression, le mécanisme de réglage de l'espacement entre les rouleaux de pression comprend un mécanisme de réglage de décalage permettant de régler un grand espacement entre les rouleaux de pression et un mécanisme de réglage fin permettant de régler un espacement fin entre les rouleaux de pression, le mécanisme de réglage de décalage entraîne le premier moyen de retenue coulissant (31) en déplacement le long de la rainure de coulissement, le mécanisme de réglage fin entraîne le deuxième moyen de retenue coulissant (32) en déplacement le long de la rainure de coulissement.

2. Machine à découper manuelle pour l'artisanat selon la revendication 1, dans laquelle la machine à découper manuelle pour l'artisanat comprend un gabarit et une plaque d'appui, dans laquelle le gabarit inclut une paire de gabarits supérieur et inférieur, un support à motif étant pris en sandwich entre les gabarits supérieur et inférieur, et dans laquelle la plaque d'appui est constituée d'une paire de plaques d'appui fixées l'une à l'autre et prises en sandwich entre les rouleaux de pression, le gabarit étant pris en sandwich entre les plaques d'appui, et dans laquelle le moyen de retenue de positionnement (3) est disposé aux deux extrémités du rouleau de pression.

3. Machine à découper manuelle pour l'artisanat selon la revendication 2, dans laquelle le mécanisme de réglage de décalage inclut un bouton de réglage de décalage (8), une tige de réglage de décalage (81) et une clé d'entraînement de décalage (84), la tige de réglage de décalage (81) est parallèle au premier rouleau de pression (4), la clé d'entraînement de décalage (84) est ajustée et fixée sur deux extrémités de la tige de réglage de décalage (81) et tourne conjointement avec la tige de réglage de décalage (81), la clé d'entraînement de décalage (84) comporte des surfaces de clé de décalage (841), le nombre de surfaces de clé de décalage (841) est de deux, des distances axiales entre les différentes surfaces de clé de décalage (841) et la tige de réglage de décalage (81) sont différentes ; le premier moyen de retenue coulissant (31) à deux extrémités du premier rouleau de pression (4) est doté d'une clé d'entraînement de décalage correspondante (33), la clé d'entraînement de décalage (33) comporte une surface de clé d'entraînement de décalage correspondante, lorsque le bouton de réglage de décalage (8) est tourné, la tige de réglage de décalage (81) est entraînée en rotation ; et des surfaces d'about de la surface de clé de décalage (841) et de la surface de clé d'entraînement de décalage génèrent un changement.

4. Machine à découper manuelle pour l'artisanat selon la revendication 3, dans laquelle un siège de support de tige de réglage de décalage est disposé entre les deux extrémités de la tige de réglage de décalage (81) ou
dans laquelle la clé d'entraînement de décalage (33) est disposée séparément et incorporée dans une surface du premier moyen de retenue coulissant (3) ou dans laquelle les engrenages du jeu d'engrenages de réduction de vitesse et du jeu d'engrenages à vitesse constante sont formés par estampage d'une plaque métallique fine.

5. Machine à découper manuelle pour l'artisanat selon la revendication 3, dans laquelle le moyen de retenue de positionnement (3) est une structure de boîtier appariée, des parois latérales sur les deux côtés de la structure de boîtier sont des structures verticales, et les parois latérales forment la rainure de coulissement, et dans laquelle un ressort de rappel (34) est de préférence disposé entre le moyen de retenue de positionnement et le premier moyen de retenue coulissant (31).

6. Machine à découper manuelle pour l'artisanat selon la revendication 3, dans laquelle le mécanisme de réglage fin inclut un bouton de réglage fin (9), une tige de réglage fin (95) et une roue tournante de réglage fin (98), la tige de réglage fin (95) est parallèle au deuxième rouleau de pression (5), la roue tournante de réglage fin (98) est emmanchée et fixée sur deux extrémités de la tige de réglage fin (95) et tourne conjointement avec la tige de réglage fin (95), un axe central de la roue tournante de réglage fin (98) est dévié par rapport à un axe de la tige de réglage fin (95), et le deuxième moyen de retenue coulissant (32) est doté d'un trou de roue tournante de réglage fin (321) pour le montage de la roue tournante de réglage fin (98).

7. Machine à découper manuelle pour l'artisanat selon la revendication 6, dans laquelle le mécanisme de réglage fin inclut en outre un jeu d'engrenages de réglage fin, le jeu d'engrenages de réglage fin inclut une paire composée d'un engrenage de réglage fin (92) et d'un pignon de réglage fin (91) destinés à engrener l'un avec l'autre, l'engrenage de réglage fin (92) est relié fixement à la tige de réglage fin (95), et le pignon de réglage fin (91) est relié au boîtier (1) ou au moyen de retenue de positionnement (3).

8. Machine à découper manuelle pour l'artisanat selon la revendication 7, dans laquelle un siège de support de tige de réglage fin est disposé entre les deux extrémités de la tige de réglage fin (95).

9. Machine à découper manuelle pour l'artisanat selon la revendication 8, dans laquelle le bouton de réglage fin (9) est doté d'un engrenage de verrouillage (93), un manchon (931) est disposé axialement sur l'engrenage de verrouillage (93), une extrémité du manchon (931) est reliée axialement au bouton de réglage fin (9), un axe du pignon de réglage fin (91) est ajusté dans le manchon (931), le pignon de réglage fin (91) et l'engrenage de verrouillage (93) sont reliés coaxialement, le boîtier (1) ou le moyen de retenue de positionnement (3) est doté d'une rainure de verrouillage de réglage fin, la rainure de verrouillage de réglage fin présente une forme adaptée à l'engrenage de verrouillage (93), et un ressort de poussée (94) est disposé dans le manchon (931).

10. Machine à découper manuelle pour l'artisanat selon la revendication 1, comprenant en outre une ou plusieurs plaques d'appui rattachées les unes aux autres, la plaque d'appui étant prise en sandwich entre le premier rouleau de pression (4) ou le deuxième rouleau de pression (5).

11. Machine à découper manuelle pour l'artisanat selon la revendication 1, dans laquelle le mécanisme de réglage de décalage inclut un bouton de réglage de décalage (8), une tige de réglage de décalage (81) et une clé d'entraînement de décalage (84), la tige de réglage de décalage (81) est parallèle au premier rouleau de pression (4), la clé d'entraînement de décalage (84) est emmanchée et fixée sur deux extrémités de la tige de réglage de décalage (81) et tourne conjointement avec la tige de réglage de décalage (81), la clé d'entraînement de décalage (84) comporte plus de deux surfaces de clé de décalage (841), des distances axiales entre les différentes surfaces de clé de décalage (841) et la tige de réglage de décalage (81) sont différentes ; le premier moyen de retenue coulissant (31) à deux extrémités du premier rouleau de pression (4) est doté d'une surface de clé d'entraînement de décalage correspondante, lorsque le bouton de réglage de décalage (8) est tourné, la tige de réglage de décalage (81) est entraînée en rotation ; et des surfaces d'about de la surface de clé de décalage (841) et de la surface de clé d'entraînement de décalage génèrent un changement.

12. Machine à découper manuelle pour l'artisanat selon la revendication 1 ou 2, dans laquelle deux côtés du boîtier (1) sont dotés de plaques de transport (10), et les plaques de transport (10) sont reliées de façon rotative au boîtier (1).

13. Machine à découper manuelle pour l'artisanat selon la revendication 12, dans laquelle une partie inférieure du boîtier (1) est dotée de jambes de support (14), les jambes de support (14) incluent respectivement une ventouse apte à être déplacée vers le haut et le bas ; une partie supérieure de la ventouse est reliée fixement à un siège de connexion (101), le siège de connexion (101) est disposé à l'intérieur du boîtier (1) ; une extrémité du siège de connexion (101) est dotée d'un trou de tige (102), le trou de tige (102) est doté d'un arbre à cames (103), les plaques de transport (10) sont reliées de façon rotative au boîtier (1) par le biais de l'arbre à cames (103) ; le siège de connexion (101) et la ventouse sont déplacés vers le haut et le bas conjointement avec la rotation de l'arbre à cames (103).

14. Machine à découper manuelle pour l'artisanat selon la revendication 1 ou 2, dans laquelle l'engrenage de poignée (61) est doté d'une tige de connexion (104) ajustée et fixée à la poignée (2), une paroi latérale de la tige de connexion (104) est dotée d'une rainure d'engagement annulaire (105) ; la poignée (2) est dotée d'un dispositif de verrouillage axial destiné à s'engager avec la rainure d'engagement annulaire (105), le dispositif de verrouillage axial comprend une plaque d'engagement (107) insérée dans et retirée de la rainure d'engagement annulaire (105) et un bouton poussoir (108) destiné à commander le mouvement de la plaque d'engagement (107), et le bouton poussoir (108) est disposé sur une paroi extérieure de la poignée (2) et peut être déplacé vers l'arrière et l'avant et dans laquelle la poignée (2) comporte de préférence une rainure de positionnement (109) à l'intérieur de celle-ci, la plaque d'engagement (107) est déplacée vers l'arrière et l'avant dans la rainure de positionnement (109) ; un déflecteur (110) perpendiculaire à la direction de déplacement de la plaque d'engagement (107) est disposé dans la rainure de positionnement (109), un ressort de rappel (111) est disposé entre la plaque d'engagement (107) et le déflecteur (110) ; dans un état naturel, la plaque d'engagement (107) est engagée avec la rainure d'engagement annulaire (105).

15. Machine à découper manuelle pour l'artisanat selon la revendication 6, dans laquelle le mécanisme de réglage fin inclut en outre un jeu d'engrenages de réglage fin, le jeu d'engrenages de réglage fin inclut une paire composée d'un premier engrenage de réglage et d'un deuxième engrenage de réglage destinés à engrener l'un avec l'autre, le premier engrenage de réglage fin est relié fixement à la tige de réglage fin (95), et le deuxième engrenage de réglage est relié au boîtier (1) ou au moyen de retenue de positionnement (3).
